# EUROPÄISCHE PATENTSCHRIFT

(11) **EP 2 341 405 B1**
(45) Veröffentlichungstag und Bekanntmachung des Hinweises auf die Patenterteilung: **05.08.2015**
(21) Anmeldenummer: 10016017.5
(22) Anmeldetag: 23.12.2010
(51) Int. Cl.: G05B 19/042

(54) **Verfahren zum Betrieb einer Maschine**
Method for operating a machine
Procédé destiné au fonctionnement d'une machine

(30) Priorität: 30.12.2009 DE 102009060891
(43) Veröffentlichungstag der Anmeldung: 06.07.2011
(73) Patentinhaber: Robert Bosch GmbH, 70469 Stuttgart (DE)
(72) Erfinder: Bregenzer, Jürgen, 97072 Würzburg (DE)
(74) Vertreter: Thürer, Andreas

(56) Entgegenhaltungen:
- US-A1- 2002 173 860
- ANONYMOUS: "Industrial Control Solutions Guide", INTERNET CITATION, 26. Januar 2007 (2007-01-26), XP002475491, Gefunden im Internet: URL:http://www.archive.org/web/20070126043 519/http://rtcmagazine.com/pdfs/ICSGv3.pdf [gefunden am 2008-04-08]
- "VMware Understanding Full Virtualization, Paravirtualization, and Hardware Assist", , 1. Januar 2007 (2007-01-01), Seiten 1-17, XP055084289, Gefunden im Internet: URL:http://www.vmware.com/files/pdf/VMware _paravirtualization.pdf [gefunden am 2013-10-16]

## Beschreibung

Die Erfindung betrifft ein Verfahren zum Betrieb einer Maschine und die Maschine als solche.

Es ist bekannt, zur Steuerung von Maschinen sogenannte Multicore-CPUs zu verwenden, das heißt, Recheneinheiten mit mehreren Prozessorkernen.

Die Offenlegungsschrift DE 10 2006 052 757 A1 zeigt ein Automatisierungsgerät zur Steuerung, Überwachung und Beeinflussung eines technischen Prozesses. Das Automatisierungsgerät umfasst eine Verarbeitungseinheit mit mehreren Verarbeitungskernen. In dem von der RTC Group veröffentlichen "Industrial Control Solutions Guide" (XP002475491) wird offenbart, ein Ressourcenverwaltungsprogramm auf einer Recheneinheit zu implementieren, welches Betriebssystemlaufzeitumgebungen für Betriebssysteme bereitstellt.

Tatsache bei solchen Lösungen ist jedoch auch, dass die vorhandenen Ressourcen, wie beispielsweise Kommunikationsschnittstellen, limitiert sind und trotz erhöhter Rechenleistung aufgrund der Verwendung der Mehrprozessorlösungen immer nur für dasjenige gerade ablaufende Maschinenprogramm zur Verfügung stehen, welches die Peripherie nutzt. Wünschenswert wäre es, die Resourcen flexibler zu nutzen.

Die Erfindung stellt ein Verfahren zum Betrieb einer Maschine vor. Die Maschine wird mittels mehrerer Automatisierungskomponenten betrieben und umfasst auch eine Recheneinheit sowie eine Kommunikationsschnittstelle, insbesondere in Form einer Feldbusschnittstelle. Der Betrieb der Maschine kann Vorgänge, wie die Steuerung der Maschinenkomponenten und/oder insbesondere auch die gleichzeitige Regelung der Maschinenkomponenten umfassen. Zusätzlich kann unter dem Begriff Betrieb auch die Handhabung und Bedienung der Maschine verstanden werden. Alles in allem sind unter dem Begriff Betrieb sämtliche Vorgänge zu verstehen, welche zur Umsetzung des der Maschine zugedachten Zweckes erforderlich sind.

Der Begriff Automatisierungskomponente soll sämtliche Geräte, Einrichtungen oder Systeme umfassen, welche bei Automatisierungslösungen zum Einsatz kommen können und dem Fachmann auf dem Gebiet der Automatisierungstechnik und des Maschinenbaus zum Anmeldezeitpunkt geläufig sind. Insbesondere können Automatisierungskomponenten auch sein z.B. Steuerungen, Prozessrechner, Antriebssteuerungen, Antriebe, Antriebsregler, Sensoren, Aktoren, Regelungseinrichtungen, Überwachungseinrichtungen, Schalteinrichtungen, Frequenzumrichter, Motoren aller Art und dergleichen. Diese Automatisierungskomponenten verfügen vorzugsweise über Kommunikationsschnittstellen, wie Lichtwellenleiter, Feldbusschnittstellen, parallele Schnittstellen, serielle Schnittstellen, drahtlose Kommunikationsschnittstellen und dergleichen.

Die Automatisierungskomponenten sind mittels der Kommunikationsschnittstelle und einem Kommunikationssystem (drahtgebunden, aber auch drahtlos denkbar) mit der Recheneinheit zumindest temporär verbunden. Mehrere, vorzugsweise echtzeitfähige, Betriebssysteme können auf der Recheneinheit ablaufen und Programmlaufzeitumgebungen für Maschinenprogramme bereithalten. Zusätzlich ist ein Ressourcenverwaltungsprogramm als Zwischeninstanz zwischen den Betriebssystemen der Maschinenprogramme und der Recheneinheit vorgesehen. Das Ressourcenverwaltungsprogramm kann eine Virtualisierungssoftware sein, welche die Umgebung für sogenannte virtuelle Maschinen schafft. Das Ressourcenverwaltungsprogramm ist geeignet, direkt auf die Hardware der Recheneinheit zuzugreifen und darauf abzulaufen. Alternativ kann das Ressourcenverwaltungsprogramm auch derart realisiert sein, dass es unter Zuhilfenahme eines vollwertigen oder eines rudimentären Betriebssystems auf der Hardware der Recheneinheit abläuft. Die zweite Variante nutzt dann die Gerätetreiber des Betriebssystems zur Ansteuerung der Hardware der Recheneinheit, während die erste Variante weniger Ressourcen der Recheneinheit in Anspruch nimmt, aber dafür selbst über Treiber zur Ansteuerung der Hardware der Recheneinheit verfügen muss.

Das Ressourcenverwaltungsprogramm nutzt die Rechenleistung der Recheneinheit und stellt Betriebssystemlaufzeitumgebungen bereit. Mittels des Ressourcenverwaltungsprogramms können die Ressourcen der Recheneinheit und/oder die Kommunikationsschnittstelle(n) (Feldbus und dergleichen) verwaltet werden. Auch können den Betriebssystemen die Betriebssystemlaufzeitumgebungen zugeordnet werden. Die Betriebssysteme können während der Laufzeit der Maschinenprogramme auf die Ressourcen der Recheneinheit inklusive der Kommunikationsschnittstellenressourcen mittels ihrer Betriebssystemlaufzeitumgebungen indirekt zugreifen. Auch ein direkter Zugriff (eingeschränkt oder vollständig) unter Umgehung der Betriebssystemlaufzeitumgebungen ist denkbar.

Auf die real und hardwaremäßig vorhandenen Ressourcen der Recheneinheit und insbesondere auch auf die hardwaremäßig vorhandenen Kommunikationsschnittstellen (z.B. die Feldbusressourcen, z.B. SERCOS Interface) kann somit mittels mehrerer Instanzen eines Maschinenprogramms oder mehrerer Maschinenprogramme, beispielsweise eines Maschinensteuerprogramms, annähernd gleichzeitig und gemeinsam zugegriffen werden. Wenn diese mehreren Instanzen dieselbe Hardware nutzen, können damit insbesondere Hardwarekosten reduziert werden. Maschinenprogramme könnten dabei unter demselben, unter verschiedenen oder auch ohne Betriebssystem direkt auf der Hardware ablaufen. Die Erfindung trägt demnach dazu bei, die Kosten für die Realisierung der Maschinenautomatisierung gegenüber den Wettbewerberlösungen zu senken und ermöglicht eine flexible und effektive Nutzung der zum Betrieb der Maschine erforderlichen Hardwarekomponenten.

Zusammenfassend können unter Einsatz des Ressourcenverwaltungsprogramms und unter Verwendung eines Feldbustreiberprogramms Daten unterschiedlichster Systeme (z.B. Komponenten eines Automatisierungssystems) entgegen genommen und/oder zusammengeführt werden sowie an andere Systeme weitergeleitet werden. Mehrere auf verschiedenen Betriebssystemen ablaufende Maschinenprogramme können somit gemeinsam einen einzigen vorhandenen physikalischen Feldbus inklusive dessen Feldbuscontroller nutzen, weil sie nicht direkt auf den physikalischen Feldbus zugreifen müssen, sondern indirekt mittels Zwischeninstanzen darauf zugreifen können.

Vorzugsweise kommt in dem erfindungsgemäßen Verfahren eine Recheneinheit zum Einsatz, welche mehrere Kommunikationsschnittstellen umfasst oder mehrere Kommunikationsschnittstelleninstanzen handhaben kann. Diese Schnittstellen sind dann mittels des Ressourcenverwaltungsprogramms verschiedenen oder gleichen Betriebssystemlaufzeitumgebungen zuordenbar. Die während des Betriebs komplexer Maschinen anfallenden hohen Datenraten im Rahmen von Echtzeitsteuervorgängen können somit effektiv gehandhabt werden.

Die Recheneinheit umfasst zumindest einen Prozessor mit mehreren Rechenkernen und/oder mehrere Einzelprozessoren, wobei diese Kerne bzw. Einzelprozessoren mittels des Ressourcenverwaltungsprogramms den Betriebssystemlaufzeitumgebungen zuordenbar sind. Multithreadlösungen wären ebenfalls sinngemäß einsetzbar. Die für den Betrieb der Maschine erforderlichen Ressourcen sind somit flexibel für einen spezifischen Zweck konfigurierbar und gegebenenfalls auch im späteren Verlauf änderbar, beispielsweise bei Erweiterung einer vorhandenen Maschine für die Bewerkstelligung komplexerer Aufgaben. Das Ressourcenverwaltungsprogramm stellt vorzugsweise zwei Betriebssystemlaufzeitumgebungen bereit. Eine erste Betriebssystemlaufzeitumgebung für ein echtzeitfähiges Betriebssystem und eine zweite Betriebssystemlaufzeitumgebung für ein nicht echtzeitfähiges Betriebssystem. Während das echtzeitfähige Betriebssystem zeitkritische Aufgaben, wie beispielsweise die Steuerung und/oder Regelung der Automatisierungskomponenten (z.B. Soll-/Istwertdatenhandhabung für die anzusteuernden bzw. zu regelnden Maschinenkomponenten) übernimmt, kann das nicht echtzeitfähige Betriebssystem für weniger zeitkritische Überwachungsaufgaben oder zum Zwecke der Maschinenwartung oder der Maschinenbedienung genutzt werden. Zumindest auf einem der Betriebssysteme läuft daher zumindest eine Instanz eines Steuerungs- und/oder Regelungsprogramms ab.

Zur Realisierung der Kommunikation zwischen der Recheneinheit und den Maschinenkomponenten greift ein Treiberprogramm für die Kommunikationsschnittstelle mittels des Ressourcenverwaltungsprogramms direkt auf das an die Recheneinheit angeschlossene Kommunikationssystem zu und dient somit als modulare Zwischeninstanz für Betriebssysteme und/oder Maschinenprogramme. Ein solches Treiberprogramm ermöglicht die Realisierung weitgehend hardwareunabhängiger Softwarekomponenten, erhöht die Modularität und vereinfacht die Fehlersuche und Wartung. Auch Hardwareanpassungen können ohne fundamentale Änderungen in den übergeordneten Programmen durchgeführt werden.

Eines oder mehrere der zuvor schon erwähnten Maschinenprogramme könnten die Funktion einer speicherprogrammierbaren Steuerung (Soft-SPS) softwareseitig nachbilden. Eine konventionelle, hardwaremäßig aufgebaute SPS, welche in der Regel als Teil der Maschine mitgeliefert wird, muss meist mittels eines separaten Computers oder mittels eines speziellen Programmiergerätes programmiert werden. Die SPS-Hardware selbst muss selbstverständlich ebenfalls bereitgehalten werden. Auch müsste zur Realisierung von Prozessschaubildern, die immer den aktuellen Anlagenstatus anzeigen, zusätzlicher Aufwand betrieben werden. Bei der erfindungsgemäßen Lösung sind alle diese Funktionen durch das Maschinenprogramm und die Recheneinheit schon vereinigt. Dadurch wird der Aufwand an Hardware deutlich verringert, denn man kann mit dieser Soft-SPS die komplette Maschine steuern. Somit sind bei geringem Platzbedarf und reduzierten Kosten komplexe Maschinenprozesse und Maschinenbedienkonzepte realisierbar. Die Soft-SPS kann unter einem nicht echtzeitfähigen Betriebssystem ablaufen. Die Abläufe sind wie bei einer konventionellen SPS programmiert. Es wäre auch möglich die SPS mittels einer separaten CPU zu realisieren.

Eines oder mehrere der zuvor erwähnten Maschinenprogramme könnte die Funktion einer numerischen Steuerung (NC) nachbilden. Es können beispielsweise Funktionen wie Punktsteuerung und/oder Streckensteuerung und/oder Bahnsteuerung und bis zu sechs oder mehr Bearbeitungsachsen, beispielsweise zur Bewegung eines zu bearbeitenden Werkstückes im Bearbeitungsraum einer Werkzeugmaschine, realisiert sein. Auch die Qualitätskontrolle könnte vollautomatisch in den Fertigungsprozess integriert werden. Die Überwachung von Werkzeugverschleiß und Werkzeugbruch könnte vollautomatisch ablaufen. Konventionelle Maschinen könnten durch den Einsatz der erfindungsgemäßen Lösung zu einer (C)NC-Maschine erweitert werden. Zusammen mit der zuvor genannten Soft-SPS können somit Maschinen realisiert werden, die in der Lage sind, Werkstücke mit hoher Präzision vollautomatisch herzustellen.

Zumindest ein Maschinenprogramm übernimmt vorzugsweise die Funktion der Bedieneinheit der zu betreibenden Maschine. Der Funktionsumfang umfasst alle zum Betrieb der Maschine erforderlichen Benutzereingaben (Tastatur, Touch-Screen, Spracheingabe, Bedienboxeingabe und dergleichen), Benutzerausgaben (Display, Drucker, Plotter und dergleichen) und sonstige weniger zeitkritische Vorgänge, die im Hintergrund während des Maschinenbetriebs ablaufen. Es wäre auch möglich, die Bedieneinheit mittels einer separaten CPU zu realisieren.

Ein weiteres Maschinenprogramm könnte zur frei programmierbaren Prozesssteuerung und/oder zur statistischen Prozesslenkung eingesetzt werden. Ein großes Sortiment an Produkten kann dadurch gemischt produziert werden. Der Maschinenbetreiber kann Abläufe selbst programmieren, z.B. die Reihenfolge der Abläufe und die Bearbeitungszeiten. Das Maschinenprogramm handhabt selbsttätig die Produktion der Chargen. Damit kann die Flexibilität und Produktivität und eine maximale Ausnutzung der vorhandenen Ressourcen noch weiter gesteigert werden.

Vorzugsweise erfolgt die Kommunikation zwischen der Recheneinheit und der Automatisierungskomponente unter Verwendung des Kommunikationssystems gemäß einem der SERCOS Standards, insbesondere gemäß des SERCOS III Standards basierend auf der Ethernettechnologie. Ein mittels eines echtzeitfähigen Betriebssystems ablaufendes echtzeitfähiges Maschinenprogramm kann dabei als Master fungieren, während eine anzusteuernde Automatisierungskomponente als Slave fungiert.

Für Kommunikationszwecke zwischen Master und Slave kann der MDT-Kanal nach SERCOS III Standard verwendet werden. Für Kommunikationszwecke zwischen zwei Slaves oder auch zwischen Slave und Master kann der AT-Kanal nach SERCOS III Standard verwendet werden. Ein unter einem nicht-echtzeitfähigen Betriebssystem ablaufendes Maschinenprogramm könnte zur Kommunikation mit den Automatisierungskomponenten auch den NRT-Kanal nach SERCOS III Standard verwenden. SERCOS III erfüllt alle Anforderungen an ein schnelles Kommunikationssystem, es ist außerdem offen für Erweiterungen und durchgängig. Die Automatisierungskomponenten können transparent und einfach zu einem leistungsfähigen Gesamtsystem verbunden werden. Mit Echtzeitfähigkeit ist maximale Performance und Flexibilität realisierbar.

Besonders eignet sich das erfindungsgemäße Verfahren zum Betrieb komplexer Werkzeugmaschinen, Rundtaktmaschinen, Verpackungsmaschinen, Drehtische und dergleichen, denn diese Vorrichtungen müssen den hohen Anforderungen der Betreiber an Qualität, Kosten und Leistung gerecht werden.

Die Erfindung wird nun unter Bezugnahme auf diese Zeichnungen weiter detailliert beschrieben. Die Zeichnungen sollen lediglich einige wenige von vielen denkbaren Ausführungsformen schematisch aufzeigen. Die Erfindung soll durch die Zeichnungen in keiner Weise auf die in den Zeichnungen gezeigten Ausführungsformen eingeschränkt werden. Selbstverständlich kann der Fachmann das ihm zur Verfügung stehende Fachwissen für Abwandlungen und Änderungen dieses Ausführungsbeispiel jederzeit einbringen.

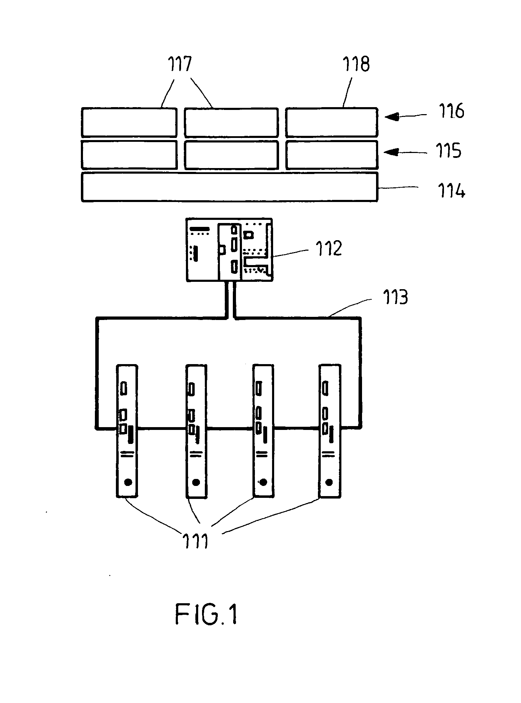

Figur 1 zeigt die Hauptkomponenten, welche einem erfindungsgemäßen Verfahren zugrunde liegen sollten. Zum Antrieb der Achsen der erfindungsgemäß zu betreibenden Maschine dienen unter anderem in diesem konkreten Beispiel vier Antriebsregler 111, welche wiederum Elektromotoren regeln. Es könnte sich hier beispielsweise um den Antrieb für eine Werkzeugmaschine handeln. Die Maschine umfasst außerdem eine Recheneinheit 112 mit Feldbuszugang. Die Recheneinheit 112 ist dementsprechend derartig ausgebildet, dass diese mit einem oder mit mehreren Feldbussen 113 verbunden werden kann. Die Erfindung umfasst in diesem Beispiel eine reale Instanz eines auf dem SERCOS - Standard basierenden Feldbusses 113. Mittels dieses Feldbusses 113 sind die insgesamt vier Antriebsachsen 111 an die einzige Recheneinheit 112 angebunden. Mittels einer entsprechenden Bedienoberfläche frei konfigurierbare Gruppen von Antriebsachsen 111 könnten mittels voneinander unabhängiger und auf der Recheneinheit 112 ablaufender Steuerungs-Instanzen unabhängig voneinander betrieben werden.

Das Ressourcenverwaltungsprogramm 114 dient als Zwischeninstanz zwischen den Betriebssystemen 117, 118 der Betriebssystemebene 116 und der Recheneinheit 112. Das Ressourcenverwaltungsprogramm 114 läuft auf der Recheneinheit 112 ab und stellt drei Laufzeitumgebungen 115 für drei Betriebssysteme 117, 118 zur Verfügung, welche alle auch einen virtuellen Treiber für den oben genannten Feldbus 113 implementieren. Somit kann jedes Betriebssystem 117, 118 für sich und jeweils unabhängig vom anderen Betriebssystem 117, 118 auf den Feldbus 113 zugreifen. Auf zwei der Laufzeitumgebungen 115 wird je eine Instanz des Echtzeitbetriebssystems VxWorks ausgeführt, unter welchem eine automatisierungstechnische Steuerungs-Software implementiert sein könnte. Die dritte Laufzeitumgebung 115 führt ein Nicht-Echtzeitsystem (z.B. Windows, Linux oder dergleichen) aus, beispielsweise zur Handhabung von weniger zeitkritischen Aufgaben.

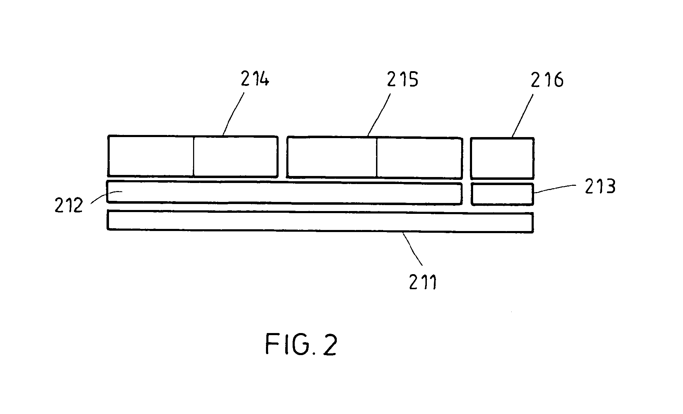

Figur 2 zeigt einen Ausschnitt eines verwendeten Übertragungsprotokolls nach SERCOS III Standard. Auf dem Taktzyklus 211 setzt unter anderem ein Echtzeitkanal 212 auf.

Ein mittels eines echtzeitfähigen Betriebssystems ablaufendes oder direkt auf einer Hardware ablaufendes echtzeitfähiges Maschinenprogramm könnte als Master fungieren und eine anzusteuernde Automatisierungskomponente könnte als Slave fungieren. Für Kommunikationszwecke zwischen Master und Slave wird der MDT-Kanal 214 verwendet. Die Erfindung ist derart realisiert, dass die Daten von zumindest einem, aber auch von mehreren Maschinenprogrammen im MDT-Kanal zusammengeführt werden.

Für Kommunikationszwecke zwischen zwei Slaves oder zwischen Slave und Master könnte auch der AT-Kanal 215 verwendet werden. Die Erfindung ist derart realisiert, dass die Daten von zumindest einem, aber auch von mehreren Antrieben im AT-Kanal zusammengeführt werden. Die Antriebe wiederum können einzelnen Maschinenprogrammen zugeordnet werden.

Für ein unter einem nicht-echtzeitfähigen Betriebssystem ablaufendes Maschinenprogramm könnte die Kommunikation mit den Automatisierungskomponenten auch mittels des NRT-Kanals 213 realisiert werden. Zur Realisierung der in Figur 1 gezeigten Anordnung werden innerhalb eines Pakets sowohl die MDT-Daten der Instanzen einer mittels der Recheneinheit realisierten Steuerungs-Software, als auch die AT-Daten der von den Instanzen angesteuerten Automatisierungskomponenten zusammengeführt. Gleichzeitig wird der NRT-Kanal des Pakets für die Übertragung von Nicht-Echtzeitdaten durch ein nicht für Echtzeitzwecke gedachtes Standardbetriebssystem genutzt. Bezugszeichen 216 steht symbolisch für das Übertragungsmedium Ethernet. Andere geeignete Medien sind denkbar.

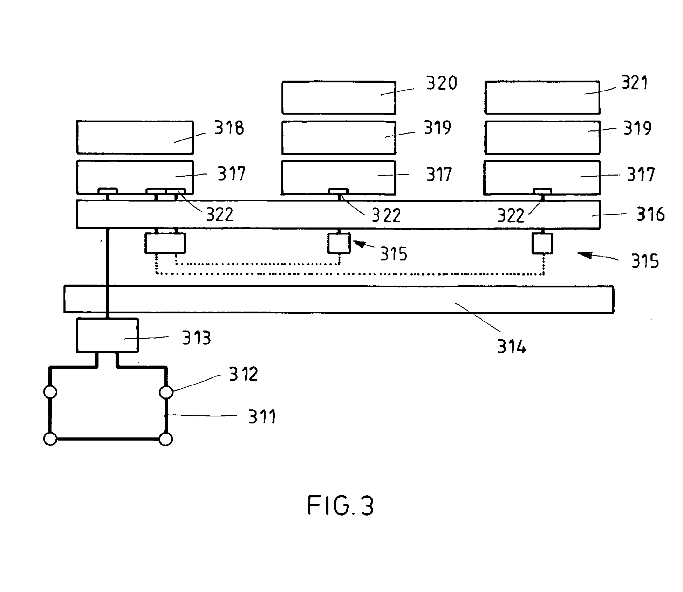

In Figur 3 gezeigt ist ein Feldbus 311 (z.B. SERCOS), ein Feldbuscontroller 313 (Hardware, die den Feldbus ansteuert, und auf die mittels eines Feldbustreibers zugegriffen werden kann), ein Ressourcenverwaltungsprogramm 316, sogenannte Sockets 315 zur Realisierung bidirektionale Kommunikationsschnittstellen, numerische Steuerungs-Software (NC) 320, 321, virtuelle Maschinen 317, Echtzeitbetriebssysteme (RTOS) 319 und ein Treiber in Form eines Software-Moduls 318 zum Betrieb des realen Feldbusses.

Das in Figur 3 gezeigte Ausführungsbeispiel der Erfindung sieht den Einsatz eines Ein- oder Mehrkernprozessors 314 oder dergleichen (z.B. Multithreading) vor. Dieser Prozessor 314 kann beispielsweise den Prozessor der aus der Figur 1 bekannten Recheneinheit darstellen. Auf diesem Prozessor 314 können mittels der virtuelle Maschinen 317 mehrere Instanzen einer Steuerungs-Software 320, 321 unter jeweils einer eigenen Instanz eines Echtzeitbetriebssystems 319 ausgeführt werden.

Das Software-Modul 318 stellt auch zumindest eine Kommunikations-Schnittstelle, beispielsweise in Form von Sockets 315 bereit, mittels derer das Software-Modul 318 mit Steuerungs-Instanzen 320, 321 oder mit anderen Instanzen kommunizieren kann. Die Kommunikation besteht dabei aus zyklischen oder antizyklischen Echtzeitdaten oder Nichtechtzeitdaten.

Die zyklische Kommunikation zwischen den Teilnehmern des Feldbusses und den Steuerungen gestaltet sich im dargestellten Ausführungsbeispiel wie folgt: Die Instanzen 320, 321 der Steuerungs-Software übergeben ihre Sollwerte jeweils den ihnen zugeordneten virtuellen Feldbustreibern 322. Diese virtuellen Feldbustreiber 322 senden die Sollwerte mittels eines Sockets 315 an den Socket 315 des für den realen Feldbus 311 zuständigen Treibers 318. Der Treiber 318 nimmt die gegebenenfalls antizyklisch getakteten Datenströme entgegen und führt sie auf geeignete Weise in einen Datenstrom für den realen Feldbus 311 zusammen. Der Datenstrom wird dann mittels des realen Feldbustreibers 318 an den Feldbuscontroller 313 übertragen. Gleichzeitig sendet der Treiber 318 des realen Feldbusses die über den realen Feldbus 311 empfangenen Daten über seine Sockets 315 an die entsprechenden virtuellen Treiber der Instanzen der Steuerungs-Software 320, 321, welche diese dann an die Steuerungs-Software selbst weitergeben.

Auf den virtuellen Maschinen 317 der erfindungsgemäßen Virtualisierungslösung können jeweils unter Verwendung eines separaten Echtzeitbetriebssystems 319 mehrere Instanzen einer Steuerungs-Software 320, 321 ausgeführt werden. Es ist weiterhin für jede der Steuerungs-Instanzen ein virtueller Feldbustreiber vorgesehen, wodurch eine Entkopplung zwischen der Struktur der virtuellen Feldbusse und der Struktur des realen Feldbusses bewirkt wird. Sämtliche Treiber können somit im wesentlichen unabhängig voneinander bezüglich der von ihnen auszuführenden Funktion konfiguriert werden. Diese Entkopplung kann entweder transparent oder intransparent für die jeweiligen Instanzen der Steuerungs-Software realisiert werden.

Es ist auch denkbar, den Feldbustreiber 318 in der Virtualisierungslösung selbst auszuführen. Von den virtuellen Treibern der Instanzen der Steuerungs-Software (Slaves) kann dieses Software-Modul mittels geeigneter Kommunikationsschnittstellen (z.B. in Form eines Sockets 315) Daten entgegennehmen und diese auf dem realen Bus zusammenführen. Gleichermaßen kann dieses Software-Modul Daten vom realen Bus entgegennehmen und diese an die Instanzen der Steuerungs-Software weiterleiten. Die Kommunikations-Schnittstelle ist dabei so konzipiert, dass es für die Kommunikation aus logischer Sicht irrelevant ist, ob die an der Kommunikation beteiligten Komponenten auf der gleichen virtuellen Maschine, verschiedenen virtuellen Maschinen oder auf einer virtuellen Maschine und in der Virtualisierungslösung selbst ausgeführt werden. Es ist dabei auch nicht relevant, ob sich die Lösung physikalisch auf einem Kern, auf mehreren Kernen eines Multicore-Prozessors oder auf mehreren voneinander separat angeordneten Prozessoren befinden.

Alternativ könnte eine Instanzen 320, 321 der Steuerungs-Software die gerade beschriebene Aufgabe erfüllen. Auf eine separate virtuelle Maschine 317 zur Ausführung des Treibers 318 könnte dann verzichtet werden. Die Funktionalität des Treibers 318 wird dann analog zur oben beschriebenen Weise von einer der Komponenten 320 oder 321 wahrgenommen.

Das Software-Modul kann vorzugsweise darüber hinaus auch eine dynamische Rekonfiguration des Systems unterstützen (Plug & Play), so dass zur Laufzeit neue Slaves in Form von Steuerungs-Instanzen hinzugenommen oder bestehende Slaves entfernt werden können.

Eine weitere Aufgabe dieses Software-Moduls kann auch in der Abstimmung zwischen den durch die oben genannte Entkopplung ermöglichten heterogenen Bus-Konfigurationen der virtuellen Treiber und einer entsprechenden Konfiguration des realen Feldbusses liegen. Ein Beispiel für einen solchen Konfigurations-Parameter ist der Bustakt.

Die Erfindung stellt somit eine Möglichkeit zur Steuerung einer Maschine bereit, welche aus mehreren Instanzen einer Steuerungs-Software bestehen kann und welche auf einer einzigen Recheneinheit ausführbar ist. Diese Recheneinheit umfasst vorzugsweise eine sogenannte Multi-Core-Architektur. Mit dieser Maßnahme kann eine vorhandene reale Hardware, beispielsweise in Form eines Feldbusses, je nach gewünschter Applikation optimal ausgelastet und verwaltet werden.

Sollte im Gesamt-System die Zahl der insgesamt über einen Feldbus anzubindenden Komponenten die Kapazität eines einzigen realen Feldbusses überschreiten, so kann die Erfindung dahingehend erweitert werden, dass die anzubindenden Komponenten unter Beibehaltung des bereits erläuterten Konzepts auf mehrere reale Feldbusse aufgeteilt werden, wobei diese entweder durch ein jeweils eigenes Software-Modul oder gemeinsam mittels eines einzigen Software-Moduls betrieben werden können.

Ein Vorteil der Erfindung besteht auch in einer Reduzierung von Kosten, insbesondere durch eine Reduzierung des Hardware-Aufwandes und durch ein gezieltes Management der benötigten Kommunikationssysteminstanzen.

## Patentansprüche

1. Verfahren zum Betrieb einer Maschine mittels mehrerer Automatisierungskomponenten (111), welche Maschine eine Recheneinheit (112) mit Kommunikationsschnittstelle in Form einer Feldbusschnittstelle umfasst, wobei die Automatisierungskomponenten (111) mittels der Kommunikationsschnittstelle und einem Kommunikationssystem in Form eines Feldbussystems (113) mit der Recheneinheit (112) verbunden sind, wobei mehrere, echtzeitfähige Betriebssysteme (117, 118) auf der Recheneinheit (112) ausgeführt werden, welche als Programmlaufzeitumgebungen für Maschinenprogramme fungieren, wobei gleichzeitig zu zumindest einem Betriebssystem (117, 118) ein Ressourcenverwaltungsprogramm (114) als Zwischeninstanz zwischen dem Betriebssystem (117, 118) und der Recheneinheit (112) auf der Recheneinheit (112) ausgeführt wird, durch welches mehrere Betriebssystemlaufzeitumgebungen (115) für Betriebssysteme (117, 118) bereitgestellt werden, und mittels dessen die Ressourcen der Recheneinheit (112) und/oder der Kommunikationsschnittstelle den Betriebssystemen (117, 118) zugeordnet werden, so dass die Betriebssysteme (117, 118) während der Laufzeit auf diese Ressourcen mittels der Betriebssystemlaufzeitumgebungen (115) zugreifen, **dadurch gekennzeichnet, dass**
die Recheneinheit (112) eine oder mehrere Kommunikationsschnittstellen für Feldbusse umfasst oder eine oder mehrere Kommunikationsschnittstelleninstanzen in Form von Feldbussen handhabt, welche Schnittstellen oder Instanzen mittels des Ressourcenverwaltungsprogramms (114) verschiedenen oder gleichen Betriebssystemlaufzeitumgebungen (115) zugeordnet werden, so dass diese eine Kommunikationsschnittstelle oder Instanz gemeinsam nutzen.

2. Verfahren gemäß einem der vorhergehenden Ansprüche, wobei die Recheneinheit zumindest einen Prozessor mit mehreren Rechenkernen und/oder Threads und/oder mehreren Einzelprozessoren mit jeweils einem Rechenkern umfasst, wobei mittels des Ressourcenverwaltungsprogramms (114) den Betriebssystemlaufzeitumgebungen (115) zumindest ein Rechenkern und/oder Thread und/oder zumindest ein Prozessor zugeordnet wird.

3. Verfahren gemäß einem der vorhergehenden Ansprüche, wobei das Ressourcenverwaltungsprogramm (114) zumindest zwei Betriebssystemlaufzeitumgebungen (115) für jeweils ein echtzeitfähiges Betriebssystem (117) und zumindest ein nicht echtzeitfähiges Betriebssystem (118) bereit stellt.

4. Verfahren gemäß einem der vorhergehenden Ansprüche, wobei auf zumindest einem Betriebssystem (117) zumindest eine Instanz eines Steuerungs- und/oder Regelungsprogramms für die Automatisierungskomponenten abläuft.

5. Verfahren gemäß einem der vorhergehenden Ansprüche, wobei ein Treiberprogramm für die Kommunikationsschnittstelle mittels des Ressourcenverwaltungsprogramms (114) direkt auf ein an die Recheneinheit (112) angeschlossenes Kommunikationssystem (113) zugreift und als Zwischeninstanz für zumindest ein Betriebssystem und/oder ein Maschinenprogramm dient.

6. Verfahren gemäß einem der vorhergehenden Ansprüche, wobei zumindest ein Maschinenprogramm die Funktion einer speicherprogrammierbaren Steuerung nachbildet.

7. Verfahren gemäß einem der vorhergehenden Ansprüche, wobei zumindest ein Maschinenprogramm die Funktion einer numerischen Steuerung nachbildet.

8. Verfahren gemäß einem der vorhergehenden Ansprüche, wobei zumindest ein Maschinenprogramm die Funktion der Bedieneinheit der zu betreibenden Maschine realisiert.

9. Verfahren gemäß einem der vorhergehenden Ansprüche, wobei zumindest ein Maschinenprogramm die Prozesssteuerung für die zu betreibende Maschine realisiert.

10. Verfahren gemäß einem der vorhergehenden Ansprüche, wobei die Kommunikation zwischen der Recheneinheit und der Automatisierungskomponente unter Verwendung des Kommunikationssystems gemäß des SERCOS III Standards.

11. Verfahren gemäß Anspruch 10, wobei ein mittels eines echtzeitfähigen Betriebssystem (117) ablaufendes echtzeitfähiges Maschinenprogramm als Master fungiert und eine anzusteuernde Automatisierungskomponente (111) als Slave fungiert, wobei für Kommunikationszwecke zwischen Master und Slave der MDT-Kanal nach SERCOS III Standard verwendet wird.

12. Verfahren gemäß Anspruch 11, wobei für Kommunikationszwecke zwischen zwei Slaves oder zwischen Slave und Master auch der AT-Kanal nach SERCOS III Standard verwendet wird.

13. Verfahren gemäß Anspruch 11 oder 12, wobei ein unter einem nicht-echtzeitfähigen Betriebssystem (118) ablaufendes Maschinenprogramm für die Kommunikation mit den Automatisierungskomponenten auch der NRT-Kanal nach SERCOS III Standard verwendet wird.

14. Maschine angepasst zur Durchführung eines Verfahrens nach einem der vorherigen Ansprüche.

15. Drehtisch, umfassend eine Maschine gemäß Anspruch 14.

## Claims

1. Method for operating a machine using a plurality of automation components (111), which machine comprises a computing unit (112) with a communication interface in the form of a field bus interface, the automation components (111) being connected to the computing unit (112) by means of the communication interface and a communication system in the form of a field bus system (113), a plurality of operating systems (117, 118) with real-time capability being executed on the computing unit (112) and acting as program runtime environments for machine programs, a resource management program (114) being executed on the computing unit (112) at the same time as at least one operating system (117, 118) as an intermediate entity between the operating system (117, 118) and the computing unit (112) and providing a plurality of operating system runtime environments (115) for operating systems (117, 118) and being used to assign the resources of the computing unit (112) and/or the communication interface to the operating systems (117, 118), with the result that the operating systems (117, 118) access these resources during the runtime using the operating system runtime environments (115), **characterized in that** the computing unit (112) comprises one or more communication interfaces for field buses or manages one or more communication interface entities in the form of field buses, which interfaces or entities are assigned to different or the same operating system runtime environments (115) by means of the resource management program (114), with the result that they jointly use a communication interface or an entity.

2. Method according to one of the preceding claims, the computing unit comprising at least one processor with a plurality of computing cores and/or threads and/or a plurality of individual processors each with a computing core, at least one computing core and/or thread and/or at least one processor being assigned to the operating system runtime environments (115) by means of the resource management program (114).

3. Method according to one of the preceding claims, the resource management program (114) providing at least two operating system runtime environments (115) for an operating system (117) with real-time capability and at least one operating system (118) without real-time capability, respectively.

4. Method according to one of the preceding claims, at least one entity of a control and/or regulating program for the automation components running on at least one operating system (117).

5. Method according to one of the preceding claims, a driver program for the communication interface directly accessing a communication system (113) connected to the computing unit (112) by means of the resource management program (114) and being used as an intermediate entity for at least one operating system and/or one machine program.

6. Method according to one of the preceding claims, at least one machine program simulating the function of a programmable logic controller.

7. Method according to one of the preceding claims, at least one machine program simulating the function of a numerical controller.

8. Method according to one of the preceding claims, at least one machine program implementing the function of the operating unit of the machine to be operated.

9. Method according to one of the preceding claims, at least one machine program implementing the process control for the machine to be operated.

10. Method according to one of the preceding claims, the communication between the computing unit and the automation component being effected using the communication system according to the SERCOS III standard.

11. Method according to Claim 10, a machine program with real-time capability which runs using an operating system (117) with real-time capability acting as the master and an automation component (111) to be controlled acting as the slave, the MDT channel according to the SERCOS III standard being used for communication purposes between the master and the slave.

12. Method according to Claim 11, the AT channel according to the SERCOS III standard also being used for communication purposes between two slaves or between the slave and the master.

13. Method according to Claim 11 or 12, a machine program running under an operating system (118) without real-time capability also using the NRT channel according to the SERCOS III standard for communication with the automation components.

14. Machine adapted to carry out a method according to one of the preceding claims.

15. Rotary table comprising a machine according to Claim 14.

## Revendications

1. Procédé de conduite d'une machine au moyen de plusieurs composants d'automatisation (111), la machine comportant une unité de calcul (112) dotée d'une interface de communication qui présente la forme d'une interface de bus de terrain, les composants d'automatisation (111) étant raccordés à l'unité de calcul (112) au moyen de l'interface de communication et d'un système de communication qui présente la forme d'un système (113) de bus de terrain,
plusieurs systèmes (117, 118) de conduite en temps réel étant réalisés sur l'unité de calcul (112) et fonctionnant comme environnements de temps d'exécution pour des programmes machine, un programme (114) de gestion des ressources étant en même temps exécuté pour au moins un système de conduite (117, 118) comme instance intermédiaire entre le système de conduite (117, 118) et l'unité de calcul (112), fournissant plusieurs environnements (115) de temps d'exécution de système de conduite pour les systèmes de conduite (117, 118) et au moyen desquels les ressources de l'unité de calcul (112) et/ou de l'interface de communication sont attribuées aux systèmes de conduite (117, 118) de telle sorte que les systèmes de conduite (117, 118) aient accès à ces ressources pendant leur temps d'exécution au moyen des environnements (115) de temps d'exécution des systèmes de conduite,
**caractérisé en ce que**
l'unité de calcul (112) comporte une ou plusieurs interfaces de communication pour les bus de terrain ou gère une ou plusieurs instances d'interface de communication présentant la forme de bus de terrain, ces interfaces ou instances étant attribuées au moyen du programme (114) de gestion des ressources à des environnements différents ou aux mêmes environnements (115) de temps d'exécution des systèmes de conduite de telle sorte que ces derniers utilisent en commun une interface de communication ou une instance.

2. Procédé selon l'une des revendications précédentes, dans lequel l'unité de calcul comporte au moins un processeur doté de plusieurs noyaux de calcul et/ou plusieurs voies et/ou plusieurs processeurs distincts dotés chacun d'un noyau de calcul, au moins un noyau de calcul et/ou une voie et/ou au moins un processeur étant associé aux environnements (115) de temps d'exécution des systèmes de conduite au moyen du programme (114) de gestion des ressources.

3. Procédé selon l'une des revendications précédentes, dans lequel le programme (114) de gestion des ressources délivre au moins deux environnements (115) de temps d'exécution de systèmes de conduite pour un système de conduite (117) en temps réel et au moins un système de conduite (118) non en temps réel.

4. Procédé selon l'une des revendications précédentes, dans lequel sur au moins un système de conduite (117), au moins une instance d'un programme de commande et/ou de régulation est exécuté pour les composants d'automatisation.

5. Procédé selon l'une des revendications précédentes, dans lequel un programme pilote de l'interface de communication a un accès direct au moyen du programme (114) de gestion des ressources à un système de communication (113) raccordé à l'unité de calcul (112) et sert d'instance intermédiaire pour au moins un système de conduite et/ou un programme de machine.

6. Procédé selon l'une des revendications précédentes, dans lequel au moins un programme de machine émule le fonctionnement d'une commande programmable par mémoire.

7. Procédé selon l'une des revendications précédentes, dans lequel au moins un programme de machine émule le fonctionnement d'une commande numérique.

8. Procédé selon l'une des revendications précédentes, dans lequel au moins un programme de machine réalise la fonction de l'unité de commande de la machine à conduire.

9. Procédé selon l'une des revendications précédentes, dans lequel au moins un programme de machine réalise la commande de processus pour la machine à conduire.

10. Procédé selon l'une des revendications précédentes, dans lequel la communication entre l'unité de calcul et le composant d'automatisation s'effectue en recourant au système de communication selon la norme SERCOS III.

11. Procédé selon la revendication 10, dans lequel un programme de machine en temps réel qui est exécuté au moyen d'un système de conduite (117) en temps réel joue le rôle de maître et un composant d'automatisation (111) à commander le rôle d'esclave, le canal MDT selon la norme SERCOS III étant utilisé dans un but de communication entre le maître et l'esclave.

12. Procédé selon la revendication 11, dans lequel, dans un but de communication entre deux esclaves ou entre un esclave et un maître, le canal AT de la norme SERCOS III est également utilisé.

13. Procédé selon les revendications 11 ou 12, dans lequel un programme de machine exécuté dans un système de conduite (118) non en temps réel utilise pour la communication avec les composants d'automatisation également le canal NRT de la norme SERCOS III.

14. Machine adaptée en vue de mettre en oeuvre un procédé selon l'une des revendications précédentes.

15. Table tournante comprenant une machine selon la revendication 14.
